# EUROPEAN PATENT APPLICATION

(11) **EP 4 773 068 A1**
(43) Date of publication of application: **08.07.2026**
(21) Application number: 24858607.5
(22) Date of filing: 28.08.2024
(51) Int. Cl.: G06Q 30/0601, G06Q 30/06, G06F 16/9535, G06F 3/0482

(54) **METHOD AND APPARATUS FOR GENERATING OBJECT COMBINATION, AND ELECTRONIC DEVICE AND READABLE MEDIUM**

(30) Priority: 28.08.2023 CN 202311089032
(71) Applicant: Beijing Youzhuju Network Technology Co., Ltd., Beijing 101299 (CN)
(72) Inventor: SHEN, Zhixin, Beijing 100028 (CN); ZHAO, Zhihao, Beijing 100028 (CN); XU, Haochen, Beijing 100028 (CN); CUI, Tianlong, Beijing 100028 (CN); CHEN, Junliang, Beijing 100028 (CN)
(74) Representative: Isarpatent
(86) International application number: PCT/CN2024/115052
(87) International publication number: WO 2025/045073

(57) **Abstract**

Disclosed are a method and apparatus for generating an object combination, an electronic device, and a readable medium. After a worker executes a first operation, at least one object combination can be generated. Combination information corresponding to the at least one object combination is displayed on a recommendation page. The combination information includes description information, matching information and interactive controls of objects included in the object combination. Each of the at least one object combination includes at least two objects. At least two objects belonging to one object combination satisfy a preset matching condition.

## Description

### CROSS-REFERENCE TO RELATED APPLICATION(S)

This application claims priority to Chinese Application No. 202311089032.9, filed with the China National Intellectual Property Administration on August 28, 2023, and entitled "METHOD AND APPARATUS FOR GENERATING OBJECT COMBINATION, ELECTRONIC DEVICE, AND READABLE MEDIUM", the disclosure of which is incorporated herein by reference in its entirety.

### FIELD

The disclosure relates to the technical field of computers, and particularly relates to a method and apparatus for generating an object combination, an electronic device, and a readable medium.

### BACKGROUND

As the internet technology develops, people can online view, purchase and obtain online objects, and workers can better display the objects to people through editing, management, etc. For instance, workers of online stores can display commodities and/or services in the online stores through editing, management, etc.

At present, the workers can manually match a plurality of online objects to obtain object combinations on online management platforms and display the object combinations to people, so people can online browse, view and even purchase the object combinations.

However, it is inconvenient for the workers to manually match the object combinations, and the matched object combinations vary in quality. Thus, online marketing may not be optimized.

### SUMMARY

In order to solve the above technical problems, the disclosure provides a method and apparatus for generating an object combination, an electronic device, and a readable medium. The object combination can be automatically generated, which is convenient for a worker and can ensure quality of the object combination automatically generated. Therefore, it is possible to optimize an online marketing situation.

In order to realize the above objective, the technical solution provided by the disclosure is as follows:

In a first aspect, the disclosure provides a method for generating an object combination. The method includes:
generating at least one object combination in response to a first operation in execution, where each of the at least one object combination includes at least two objects, and the at least two objects belonging to one object combination satisfy a preset matching condition; and
displaying combination information corresponding to the at least one object combination on a recommendation page, where the combination information includes description information, matching information and interactive controls of objects included in the object combination.

In some possible implementations, the generating at least one object combination includes:
generating the at least one object combination based on target information of each object, where the target information of each object is used to indicate an association relation between the object and other objects.

As an instance, the generating the at least one object combination based on target information of each object includes:
determining a matching main picture from pictures of a first object, where the matching main picture further includes at least one second object; and
determining a first object combination based on the matching main picture.

In the instance, first combination information corresponding to the first object combination includes a first region, a second region and a third region. The first region is configured to carry description information of the first object combination, the description information includes a matching main picture of the first object combination, and the matching main picture includes an object identifier of each object and an anchor point corresponding to each object. The second region is configured to carry matching information of the first object combination, and the matching information includes a title of matching and/or a resource attribute of the matching. The third region is configured to carry an interactive control of the first object combination, and the interactive control includes at least one of controls as follows: a feedback control, an editing control and a release control.

As another instance, the generating the at least one object combination based on target information of each object includes:
combining, based on categories to which all objects belong and a preset category mapping relation, objects belonging to a first category and objects belonging to a second category, and obtaining candidate object combinations, where the first category and the second category belong to the category mapping relation; and
selecting an object combination satisfying an object association relation from the candidate object combinations, and obtaining the at least one object combination, where the object association relation indicates that a historical association operation exists between the objects.

In the instance, the at least one object combination includes a second object combination. Second combination information corresponding to the second object combination includes a fourth region, a fifth region and a sixth region. The fourth region is configured to carry description information of the second object combination, the description information includes object information of each object in the second object combination, and the object information includes at least one piece of information as follows: a picture of an object, a title of the object, a resource attribute of the object or an identifier of the object. The fifth region is configured to carry matching information of the second object combination, and the matching information includes a title of matching and/or a resource attribute of the matching. The sixth region is configured to carry an interactive control of the second object combination, and the interactive control includes at least one of controls as follows: a feedback control, an editing control and a release control.

In some possible implementations, the method further includes:
releasing a third object combination in response to a second operation in execution, where the third object combination is an object combination of the at least one object combination corresponding to the second operation, and the third object combination includes one or more object combinations.

In some possible implementations, the method further includes:
adding a matching score to the combination information, where the matching score is configured to guide display and/or release of the object combination.

In a second aspect, the disclosure provides an apparatus for generating an object combination. The apparatus includes:
a generating unit configured to generate at least one object combination in response to a first operation in execution, where each of the at least one object combination includes at least two objects, and the at least two objects belonging to one object combination satisfy a preset matching condition; and
a displaying unit configured to display combination information corresponding to the at least one object combination on a recommendation page, where the combination information includes description information, matching information and interactive controls of objects included in the object combination.

In some possible implementations, the generating unit is specifically configured to:
generate the at least one object combination based on target information of each object, where the target information of each object is used to indicate an association relation between the object and other objects.

As an instance, the generating unit is specifically configured to:
determine a matching main picture from pictures of a first object, where the matching main picture further includes at least one second object; and
determine a first object combination based on the matching main picture.

In the instance, first combination information corresponding to the first object combination includes a first region, a second region and a third region. The first region is configured to carry description information of the first object combination, the description information includes a matching main picture of the first object combination, and the matching main picture includes an object identifier of each object and an anchor point corresponding to each object. The second region is configured to carry matching information of the first object combination, and the matching information includes a title of matching and/or a resource attribute of the matching. The third region is configured to carry an interactive control of the first object combination, and the interactive control includes at least one of controls as follows: a feedback control, an editing control and a release control.

As another instance, the generating unit is specifically configured to:
combine, based on categories to which all objects belong and a preset category mapping relation, objects belonging to a first category and objects belonging to a second category, and obtain candidate object combinations, where the first category and the second category belong to the category mapping relation; and
select an object combination satisfying an object association relation from the candidate object combinations, and obtain the at least one object combination, where the object association relation indicates that a historical association operation exists between the objects.

In the instance, the at least one object combination includes a second object combination. Second combination information corresponding to the second object combination includes a fourth region, a fifth region and a sixth region. The fourth region is configured to carry description information of the second object combination, the description information includes object information of each object in the second object combination, and the object information includes at least one piece of information as follows: a picture of an object, a title of the object, a resource attribute of the object or an identifier of the object. The fifth region is configured to carry matching information of the second object combination, and the matching information includes a title of matching and/or a resource attribute of the matching. The sixth region is configured to carry an interactive control of the second object combination, and the interactive control includes at least one of controls as follows: a feedback control, an editing control and a release control.

In some possible implementations, the apparatus further includes:
a release unit configured to release a third object combination in response to a second operation in execution, where the third object combination is an object combination of the at least one object combination corresponding to the second operation, and the third object combination includes one or more object combinations.

In some possible implementations, the apparatus further includes:
a scoring unit configured to add a matching score to the combination information, where the matching score is configured to guide display and/or release of the object combination.

It should be noted that for specific implementations and achieved technical effects of the apparatus, reference can be made to related descriptions of the method provided in the first aspect or any of implementations in the first aspect.

In a third aspect, the disclosure further provides an electronic device. The electronic device includes a processor and a memory.

The memory is configured to store an instruction or a program.

The processor is configured to execute the instruction or program in the memory, such that the electronic device is caused to execute the method provided in the first aspect or any of implementations in the first aspect.

In a fourth aspect, the disclosure further provides a readable medium. The readable medium stores an instruction or a program. When the instruction or the program runs on a processor, the processor is caused to execute the method provided in the first aspect or any of implementations in the first aspect.

Compared with the prior art, examples of the disclosure have at least advantages as follows:

In the technical solutions provided by the disclosure, an automatic matching function is online provided. After a worker executes a first operation corresponding to the function, at least one object combination can be generated. Moreover, combination information corresponding to the at least one object combination is displayed on a recommendation page. The combination information includes description information, matching information and interactive controls of objects included in the object combination. Each of the at least one object combination includes at least two objects. The at least two objects belonging to one object combination satisfy a preset matching condition. In this way, the worker is not required to manually match objects. Due to an operation item corresponding to the automatic matching function provided and a function module corresponding to the automatic matching function integrated in a background, the worker is only required to implement a one-click operation such that the object combination can be automatically generated and displayed, which is convenient for the worker and can ensure quality of the object combination automatically generated. Therefore, it is more convenient and intelligent to release the object combination, and it is possible to optimize an online marketing situation.

### BRIEF DESCRIPTION OF THE DRAWINGS

In order to describe technical solutions in examples of the disclosure or in the prior art more clearly, accompanying drawings required to be used in descriptions of the examples or the prior art will be briefly introduced below. Apparently, the accompanying drawings in the following descriptions are merely some examples recited in the disclosure. Those of ordinary skill in the art can also derive other accompanying drawings according to these accompanying drawings without making creative efforts.
FIG. 1 is a schematic flow diagram of a method for generating an object combination according to an example of the disclosure;
FIG. 2 is a schematic diagram of an interface of a management platform according to an example of the disclosure;
FIG. 3 is a schematic diagram of displaying an object combination by a management platform according to an example of the disclosure;
FIG. 4 is a schematic diagram of displaying a selected object combination by a management platform according to an example of the disclosure;
FIG. 5 is another schematic diagram of displaying a selected object combination by a management platform according to an example of the disclosure;
FIG. 6 is a yet another schematic diagram of displaying a selected object combination by a management platform according to an example of the disclosure;
FIG. 7 is a schematic structural diagram of an apparatus 700 for generating an object combination according to an example of the disclosure; and
FIG. 8 is a schematic structural diagram of an electronic device 800 according to an example of the disclosure.

### DETAILED DESCRIPTION OF EMBODIMENTS

In some cases, if a user wants to view and purchase a plurality of objects having specific relations by means of an online entity, for convenience of the user, the online entity generally displays a plurality of objects adjacent to each other or as an object combination to the user. A scene that the online entity presents a plurality of objects as an object combination to the user can be understood as a scene that the online entity matches a plurality of objects. For instance, in an online store, a nursing pad, a maternity hat, maternity shoes, etc. can be matched into a pre-delivery package, or a shirt and trousers can be matched into a commuter suit combination.

At present, a worker of the online entity generally manually enters a matched object combination on an operation platform of the online entity according to its own experience or sales data of each object. For instance, the operation platform of the online store has a "commodity matching" function. The worker enters an editing page through "matching building", and establishes a matching combination on the editing page by uploading a matching main picture, adding commodities, etc. The matching combination can be released after approval, so as to be viewed and/or purchased by the user. This process is convenient for the user to view and/or purchase the matching combination on the online entity, but is not friendly to the worker of the online entity. On the one hand, an object to which the worker wants to match is required and is subjected to complex editing, etc. On the other hand, quality of the object combination generated by the worker through manual object matching cannot be ensured. In most cases, the object combination provided cannot satisfy requirements of the user. Therefore, a current method for matching an object is time-consuming and laborious and has little effect.

Based on this, an example of the disclosure provides a method for generating an object combination. With a management platform of an online entity as an instance, the management platform can provide an automatic matching function. After a worker executes a first operation corresponding to the function on the management platform, the management platform can generate at least one object combination of the online entity. Moreover, combination information corresponding to the at least one object combination is displayed on a recommendation page of the management platform. Each of the at least one object combination includes at least two objects. At least two objects belonging to one object combination satisfy a preset matching condition. The combination information includes description information, matching information and interactive controls of objects included in the object combination.

In this way, the worker of the online entity is not required to manually match objects on the management platform. Since an operation item corresponding to the automatic matching function is provided on an interface of the management platform, and a function module corresponding to the automatic matching function is integrated in a background of the management platform, the worker of the online entity is only required to carry out a one-click operation on the management platform, and the management platform can automatically generate an object combination for the online entity and display the object entity to the worker, which is convenient for the worker of the online entity and can ensure quality of the object combination automatically generated. Therefore, it is more convenient and intelligent for the online entity to release the object combination, and it is possible to optimize a marketing situation of the online entity.

It should be noted that the management platform of the online entity may be a management platform page that can be operated after the online entity logs in on the management platform provided by an e-commerce enterprise carrying the online entity. The management platform may be in a form of a client or a web page.

It should be noted that a main body implementing the method for generating an object combination may be an apparatus for generating an object combination provided in an example of the disclosure. The apparatus for generating an object combination may be carried in an electronic device or a function module of the electronic device. With a scenario of the management platform of the online entity as an instance, the apparatus for generating an object combination may include the management platform of the online entity, or the apparatus for generating an object combination may be connected to the management platform of the online entity. The electronic device may be provided with a client corresponding to the management platform of the online entity, or may access a web page corresponding to the management platform of the online entity.

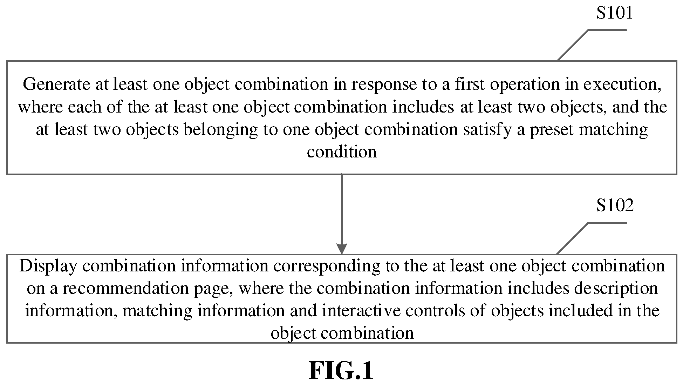

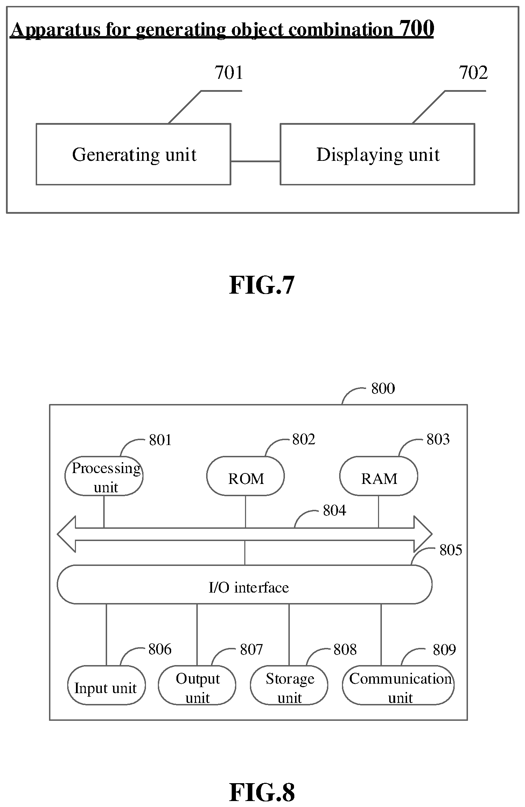

FIG. 1 is a schematic flow diagram of a method for generating an object combination according to an example of the disclosure. The method may be applied to an apparatus for generating an object combination, such as an apparatus for generating an object combination 700 shown in FIG. 7 below. Corresponding to the scenario of the management platform of the online entity, the apparatus for generating an object combination may include the management platform of the online entity or be connected to the management platform of the online entity. Therefore, it can also be considered that the method is applied to the management platform of the online entity.

As shown in FIG. 1, for instance, the method may include S101-S102 as follows:
S101: Generate at least one object combination in response to a first operation in execution. Each of the at least one object combination includes at least two objects, and the at least two objects belonging to one object combination satisfy a preset matching condition.

With an online entity as an instance, objects involved in at least one object combination belong to the same online entity. The first operation is configured to trigger the automatic matching function of the management platform of the online entity. The online entity may refer to a store in an e-commerce enterprise. The object may correspond to a commodity and/or a service in the store. The object combination may correspond to a combination of at least two commodities and/or services in the store. For instance, the online entity corresponds to a flagship store B of an e-commerce enterprise A. An object B refers to commodity a1, a2,..., or a100 in the flagship store B. The object combination may be a combination formed by matching at least two of a1, a2,..., and a100, such as a1+a3+a100, a2+a30, or a5+a33+a100, which can be regarded as an object combination.

In an example of the disclosure, an operation item corresponding to an automatic matching function is provided on a management platform of an online entity. After a worker executes an action on the operation item, it can be considered that the first operation is executed on the management platform. A background of the management platform is triggered such that objects can be automatically matched for the online entity, and at least one object combination is generated.

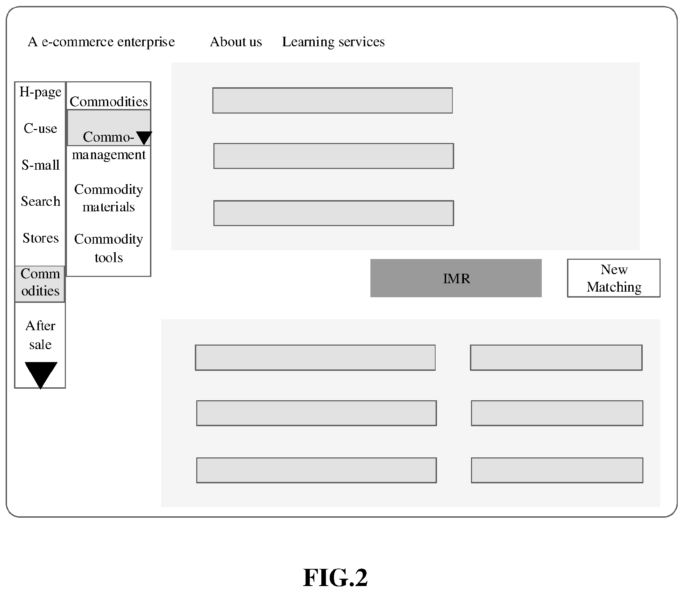

For instance, an interface corresponding to the management platform of the online entity may be as shown in FIG. 2, the interface may include an "intelligent matching recommendation (IMR)" button, and the "intelligent matching recommendation" button may correspond to the operation item corresponding to the automatic matching function on the management platform of the online entity. When a user clicks on the "intelligent matching recommendation" button, that is, the first operation is executed on the management platform, the management platform can generate at least one object combination of the online entity. It should be noted that the interface may further include other parts provided by the management platform and configured to manage online entities. FIG. 2 is only exemplary and does not limit the content of the interface corresponding to the management platform.

It can be understood that objects belonging to the same object combination satisfy a preset matching condition. The preset matching condition can be embodied by a target algorithm integrated in the background of the management platform and configured to implement the automatic matching function. The target algorithm may be any algorithm that can be configured to implement the automatic object matching function provided in an example of the disclosure. For instance, S101 may include: generate the at least one object combination through a target algorithm in a case of target information of an object included in the online entity. The target algorithm is configured to implement an automatic matching function of the management platform. The target information of the object is configured to indicate an association relation between the object and other objects. For instance, the target information of the object may include but is not limited to a matching main picture of the object, a category of the object, or a historical association operation of the object.

As an instance, in cases of objects of the online entity, if an object main picture of an object or a detail diagram in an object detail page of the object includes other objects in the online entity, the management platform may match objects based on the picture including at least two objects. In the instance, the target algorithm may be, for instance, an image recognition algorithm, and the target information may be a picture including at least two objects. S101 may specifically include: determine a matching main picture from pictures of the objects included in the online entity, where the matching main picture includes at least two objects; and determine at least two objects in the matching main picture as an object combination. With a picture of a first object including a matching main picture including both the first object and a second object as an instance, S101 may include: determine a matching main picture from pictures of the first object, where the matching main picture further includes at least one second object; and determine a first object combination based on the matching main picture. The object combination generated in the instance can be referred to as an object combination "with a main picture". The first object combination may include a matching main picture, an object identifier of each object in the matching main picture, and an anchor point corresponding to each object in the matching main picture.

The matching main picture may be, for instance, an object main picture of an object in the matching main picture, or a detail graph in an object detail page of one or more objects in the matching main picture. A principle of a picture recognition algorithm can be understood as follows: a matching main picture is found from objects of an online entity, included objects are found from the matching main picture, the found objects are marked in the matching main picture, and anchoring is carried out at corresponding positions.

It can be understood that the object identifier may be information that can uniquely identify the object, such as a name of the object, a serial number of the object, and an identity (ID) of the object. An anchor point refers to a mark that can be linked to an object detail page of an object. For instance, in a case of no operation for an anchor point, the anchor point may be displayed as a dot. When a worker moves a cursor to a preset region where the anchor point is located, related information of the object corresponding to the anchor point, such as a name and a price of a commodity, is displayed near the anchor point. When the worker clicks on the anchor point, the recommendation page skips to the object detail page of the object corresponding to the anchor point.

As an instance, in cases of objects of the online entity, if an object main picture of an object or a detail diagram in an object detail page of the object does not include other objects in the online entity, the management platform can match objects based on an association algorithm. In the instance, the target algorithm may be an association algorithm. The target information may be, for instance, a category of objects. The target information may further include a historical association operation (such as a historical association sale) between objects. S101 may specifically include: classify objects included in the online entity into different categories; combine objects belonging to a first category and objects belonging to a second category, and obtain candidate object combinations, where the first category and the second category belong to a preset category mapping relation; and determine the at least one object combination from the candidate object combinations, where the object combination includes an object identifier of each object. The object combination generated in the instance can be referred to as an object combination "with no main picture".

A category mapping relation may be preset in the association algorithm. A plurality of categories having category mapping relations have strong associations. For instance, shirts, trousers and leather shoes may be included in one category mapping relation, T-shirts and skirts may be included in another category mapping relation, but vests and cotton shoes will not be maintained in one category mapping relation.

In a case of determining the at least one object combination from the candidate object combinations, in one case, in order to obtain a more comprehensive object combination, the candidate object combinations may be directly taken as the object combinations generated in S101. In another case, in order to generate a high-quality object combination, an object combination satisfying an object association relation may be selected from the candidate object combinations, and the at least one object combination is obtained. The object association relation indicates that a historical association operation exits between objects, and may be one of rules for object matching preset in the target algorithm of the management platform. For instance, the object association relation may include a sales volume of an object, a number of times of purchasing a plurality of objects by the same user, a number of times of purchasing a plurality of objects within a preset time, etc. In addition, quality of candidate object combinations can be determined based on the object association relation. A preset number (such as 3) of candidate object combinations having desirable quality may be determined as the object combinations generated in S101, or candidate object combinations having quality indexes greater than a preset index threshold may be determined as the object combinations generated in S101. A numerical value of the quality index is configured to indicate a reasonable degree of matching of the candidate object combination. Whether the candidate object combination is a shelf-sales object may also serve as one of data bases for obtaining the quality index. The shelf-sales object may refer to an object having a sales volume, and the non-shelf-sales object may refer to an object having no sales volume. In order to improve the quality of the generated object combination, the candidate object combination in which the shelf-sales object is located may be preferentially determined as the object combination generated in S101.

It can be seen that through the automatic matching function on the management platform, the online entity can one-click obtain an object combination, which is extremely friendly to the worker of the online entity.

S102: Display combination information corresponding to the at least one object combination on a recommendation page. The combination information includes description information, matching information and interactive controls of objects included in the object combination.

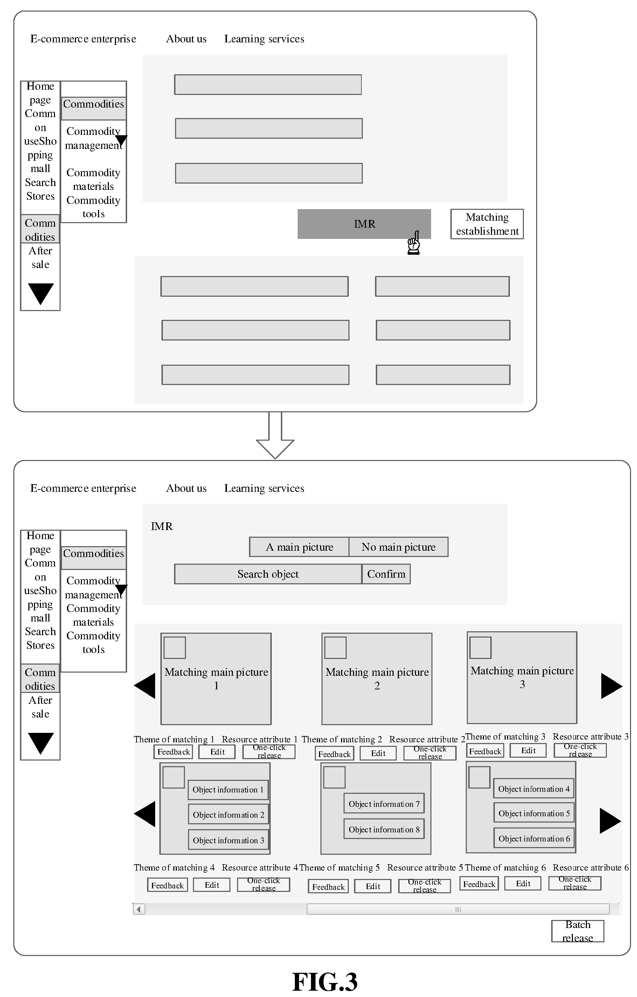

For instance, when the worker clicks on an "intelligent matching recommendation" button in FIG. 2, the interface corresponding to the management platform may skip to the recommendation page shown in FIG. 3. With reference to FIG. 3, the recommendation page may include a selection portion and a display portion. The selection portion may be, for instance, a "with a main picture" option, a "with no main picture" option and an object search box. The user may select some object combinations from the recommendation page shown in FIG. 3 for display by operating the selection portion. The display portion may include a preset number (such as 3) of object combinations "with a main picture" and a preset number of object combinations "with no main picture". The display portion may further include a sliding bar at the bottom or sliding marks at two sides so as to be configured to carry out a switch to display other object combinations.

In a case of display of the object combination "with a main picture", with first combination information corresponding to a first object combination "with a main picture" displayed in S102 as an instance, the first combination information may include a first region, a second region and a third region. The first region is configured to carry description information of the first object combination, the description information includes a matching main picture of the first object combination, and the matching main picture includes an object identifier of each object and an anchor point corresponding to each object. The second region is configured to carry matching information of the first object combination, and the matching information includes a title of matching and/or a resource attribute of the matching (such as a sale price). The third region is configured to carry an interactive control of the first object combination, and the interactive control includes at least one of controls as follows: a feedback control, an editing control and a release control. Each object combination "with a main picture" is displayed on the recommendation page and can be displayed in a form of a card.

In a case of display of the object combination "with no main picture", with second combination information corresponding to a second object combination "with no main picture" displayed in S102 as an instance, the second combination information may include a fourth region, a fifth region and a sixth region. The fourth region is configured to carry description information of the second object combination, the description information includes object information of each object in the second object combination, and the object information includes at least one piece of information as follows: a picture of an object, a title of the object, a resource attribute of the object or an identifier of the object. The fifth region is configured to carry matching information of the second object combination, and the matching information includes a title of matching and/or a resource attribute of the matching. The sixth region is configured to carry an interactive control of the second object combination, and the interactive control includes at least one of controls as follows: a feedback control, an editing control and a release control. Each object combination "with no main picture" is displayed on the recommendation page and can be displayed in a form of a card.

It should be noted that each object combination on the recommendation page of the management platform may have a title of matching. The title of the matching is configured to reflect features of the object combination. For instance, the title of the matching of an object combination of a shirt+trousers+leather shoes may be "Commuter suit". The title of the matching may be automatically generated by the target algorithm. In addition, in order to make the online title of the matching more appropriate, the worker can also modify the title of the matching.

In some possible implementations, based on selection of the recommendation page corresponding to the management platform, the selected object combination can be displayed on the recommendation page. For instance, the method may further include: display, in response to a selection operation executed on the management platform, an object combination conforming to the selection operation. The object combination conforming to the selection operation is an object combination of the at least one object combination matching the selection operation. The selection operation may include, for instance, an operation of inputting an object identifier of an object to be searched for in an object search box, and an operation of clicking on a "with a main picture" option or clicking on a "with no main picture" option.

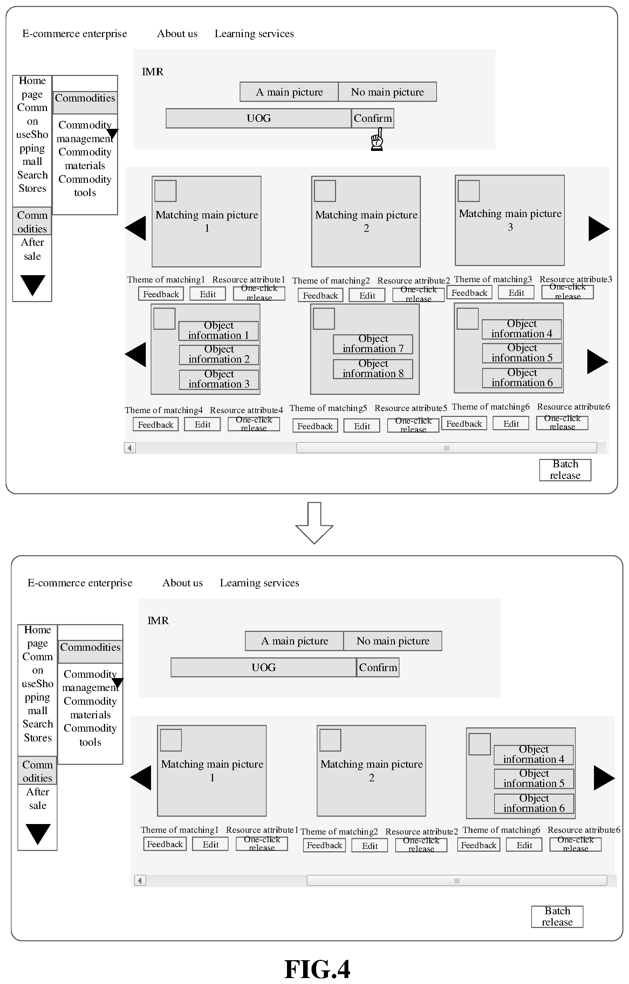

As an instance, if the selection operation is to input the object identifier of the search object in the object search box, as shown in FIG. 4, each object combination of object combinations displayed on the recommendation page after skipping includes the search object.

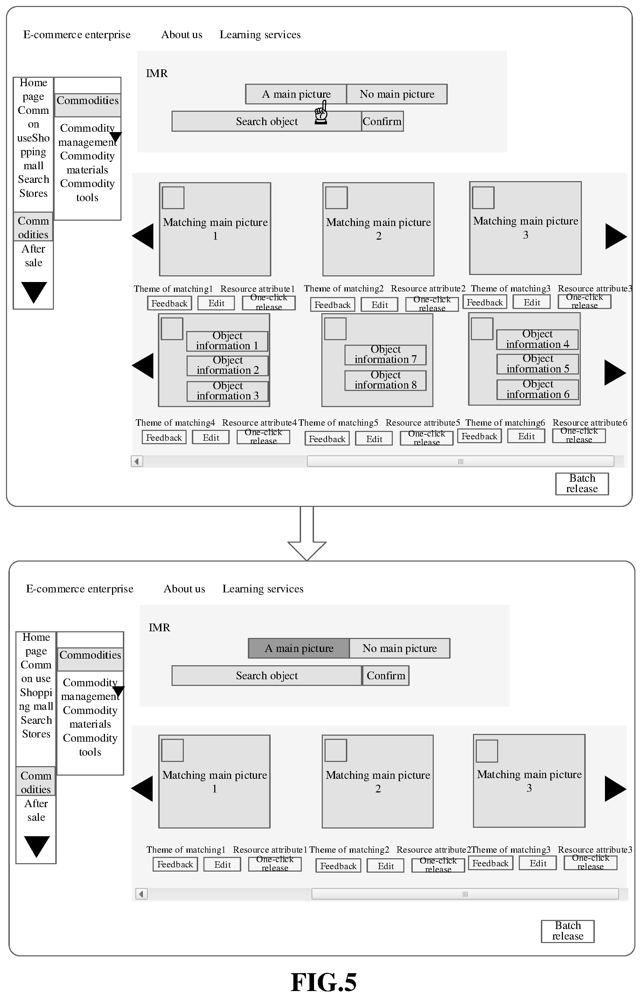

As another instance, if the selection operation is to click on the "with a main picture" option, as shown in FIG. 5, the object combinations displayed on the recommendation page after skipping are all object combinations "with a main picture".

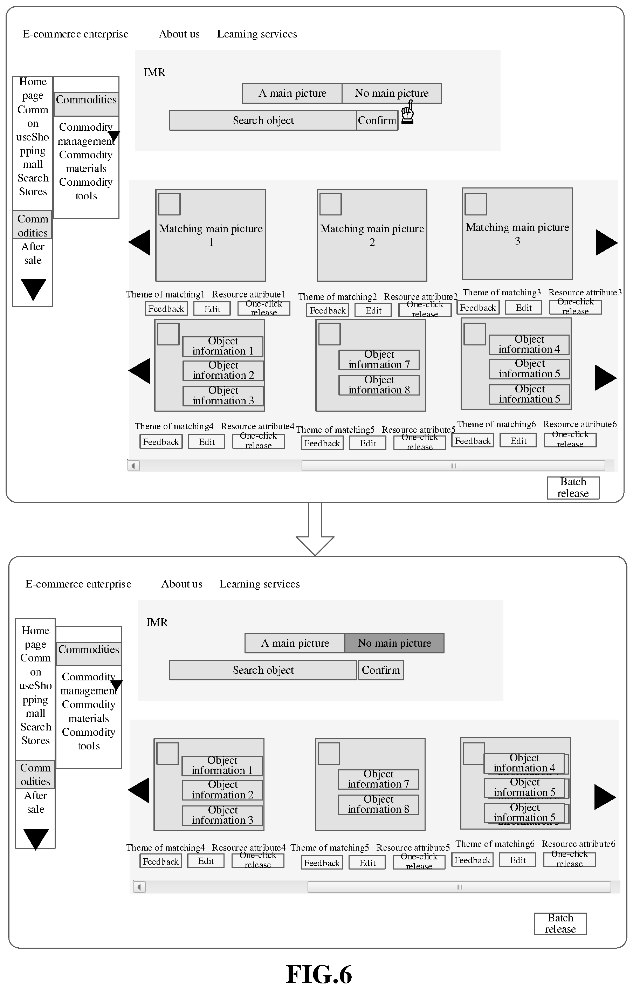

As yet another instance, if the selection operation is to click on the "with no main picture" option, as shown in FIG. 6, the object combinations displayed on the recommendation page after skipping are all object combinations "with no main picture".

It should be noted that the selection operation may further include an operation of selecting an object category. After selection, a selection result includes all object combinations of objects belonging to the selected category.

It should be noted that through a selection operation, the selection result may include may object combinations. Due to limitation of the display region on the recommendation page, some results in the selection result can be displayed. The worker can carry out, by means of the sliding bar at the bottom or the sliding marks on two sides, a switch to display other object combinations belonging to the selection result.

It should be noted that the management platform may carry out validity verification on the object combination displayed on the recommendation page. If it is determined that a target object satisfying a non-matching condition exists in the object combinations that conform to the selection operation, an object combination corresponding to the target object is not displayed, or the object combination corresponding to the target object is displayed as non-matching (in this case, a non-matching reason may be displayed, for instance, the target object is not in stock, and the object combination may be displayed in a gray scale and is in an unreleasable state). The non-matching condition may include but is not limited to an object that is not released, and marketing objects or suits that are mutually exclusive.

In some possible implementations, one or some object combinations can be easily released on the recommendation page corresponding to the management platform. For instance, the method may further include: release a third object combination at an online entity in response to a second operation executed on the management platform. The third object combination is an object combination of the object combinations displayed on the management platform corresponding to the second operation. The third object combination is released on the online entity, which means that the third object combination can be displayed on a recommendation page of an online entity of an e-commerce enterprise and can be viewed and/or purchased by a user.

As an instance, the second operation may correspond to a first release operation of the third object combination. The third object combination includes an object combination. With reference to FIG. 2, a "one-click release" option exits below each object combination on the recommendation page. Thus, the worker can release the third object combination by clicking on the "one-click release" option of the third object combination.

As another instance, the second operation may correspond to a second release operation and a selection operation of a plurality of third object combinations. The third object combination includes a plurality of object combinations. With reference to FIG. 2, a selection box that can be operated exists at an upper left corner of the matching main picture of each object combination of the recommendation page. A "batch release" option exists at a lower right corner of the recommendation page. Then, the worker can check a plurality of third object combinations, and then click on the "batch release" option, so as to release the a plurality of selected third object combinations. It should be noted that whether the third object combination can be matched is required to be checked and matching number limitation is required to be checked for batch release. For specific verification, see the descriptions below. If batch release fails, the worker can be reminded by means of a pop-up window. Moreover, in a task list of batch release, a number of third object combinations that are successfully released and fail to be released can be marked, and details of the third object combinations that fail to be released can be recorded such that operation and maintenance personnel can subsequently view reasons and optimize the management platform.

It should be noted that the management platform can also support configuring "release time". In a case that the worker configures the release time on the management platform as T1 or configures release after preset duration (such as 5 hours), after the worker executes the second operation on the management platform, the management platform can execute an operation of "releasing a third object combination on an online entity" at corresponding release time.

In a case of an online third object combination, real-time verification that the management platform may carry out may include: on the one hand, verification of whether matching of a third object combination is valid, and on the other hand, verification of whether a third object combination satisfies a matching number limit.

In a case of verification of whether matching of a third object combination is valid, the method may further include: if it is determined that a target object that satisfies a non-matching condition exits in a third object combination, remove the third object combination to which the target object belongs. The non-matching condition may include but is not limited to an object that is not in stock, an object that is not released, and marketing objects or suits that are mutually exclusive. If a target object that satisfies a non-matching condition exists, the worker may be reminded by means of a pop-up window. For instance, a title of the pop-up window may be as follows: Fail to establish matching purchase. A content of the pop-up window may be as follows: since the target object in the third object combination is an object that is not released, establishment is failed, and please modify a state and try again. A "confirm" button may be further included in the pop-up window, and the pop-up window is closed by clicking on the "confirm" button.

In a case of verification of whether the third object combination satisfies a matching number limit, the method may further include: determine whether a number of occurrence of each object in the third object combination is greater than a first number threshold (such as 100), and if so, not release the third object combination including the object that exceeds the first number threshold; or determine whether a number of third object combinations is greater than a second number threshold (such as 500), and if so, not release third object combinations that exceed the second number threshold. If third object combinations that exceed the matching number limit exist, the worker can be reminded by means of a pop-up window. For instance, the title of the pop-up window may be as follows: Fail to establish matching purchase. The content of the pop-up window may be as follows: the object participates in establishing 100 third object combinations (or establishing 500 third object combinations) and cannot establish third object combinations any more. You can replace an earliest third object combination established by the object to complete this establishment. Do you want to replace it? A "replace" button and an "establishment cancel" button may be included in the pop-up window. By clicking on the "replace" button, the earliest third object combination established by the object is replaced with the third object combination to be released. By clicking on the "establishment cancel" button, the third object combination to be released is finished from being established, and the pop-up window is closed.

In some possible implementations, in order to subsequently optimize the target algorithm and provide desirable experience for the online entity, the method may further include: determine a matching score for the object combination based on a viewing number, a sales volume, a buyer evaluation, a worker evaluation, etc. of the object combination, and display the matching score for the object combination displayed on the management platform. The matching score is configured to guide display and/or release of the object combination. For instance, the worker can release object combinations having high matching scores. For another instance, the worker can choose to "one-key adjust" a display order of all object combinations in the recommendation page according to the matching scores. The worker can even set a matching score threshold for display. Object combinations corresponding to matching scores less than the matching score threshold will not be displayed on the recommendation page. For yet another instance, the worker can also influence the matching scores of the object combinations by filling in evaluations.

In some possible implementations, an editing function for object combinations is further provided on the recommendation page of the management platform such that more intelligent human-computer interaction can be realized. Thus, a process of matching objects is more perfect. The method may further include: update a fourth object combination to a fifth object combination in response to executing a third operation on the management platform. The fourth object combination is an object combination of object combinations displayed on the management platform corresponding to the third operation. The third operation includes an editing operation. The editing operation may include but is not limited to an operation of editing matching and/or an operation of editing a marketing campaign. If the third operation is the operation of editing matching, a page for editing matching is entered, and related data of at least one object combination generated based on the method provided in an example of the disclosure is brought in, such that the worker can modify a matching mode of the object combination. If the third operation is the operation of editing a marketing campaign, the object combination generated in S101 is generated into an object combination to be released, and then a page for editing a marketing campaign enters. The object combination to be released is valid and released without being affected by editing the marketing campaign. Even if the page for editing the marketing campaign exits, the object combination to be released can also be valid and released. The marketing campaign may include, for instance, promotion marketing, limited-time limited-number purchases (such as instant kill), full discounts, coupons, person-only prices, and giveaways or gifts.

It can be seen that in the method, since an operation item corresponding to the automatic matching function is provided on an interface of the management platform, and a function module corresponding to the automatic matching function is integrated in a background of the management platform, the worker of the online entity is only required to carry out a one-click operation on the management platform. The management platform can automatically generate an object combination for the online entity and display the object entity to the worker. The worker of the online entity is not required to manually match objects on the management platform, which is convenient for the worker of the online entity and can ensure quality of the object combination automatically generated. Therefore, it is more convenient and intelligent for the online entity to release the object combination, and it is possible to optimize a marketing situation of the online entity.

Correspondingly, an example of the disclosure further provides an apparatus 700 for generating an object combination. With reference to FIG. 7, the apparatus 700 may include:
a generating unit 701 configured to generate at least one object combination in response to a first operation in execution, where each of the at least one object combination includes at least two objects, and the at least two objects belonging to one object combination satisfy a preset matching condition; and
a displaying unit 702 configured to display combination information corresponding to the at least one object combination on a recommendation page, where the combination information includes description information, matching information and interactive controls of objects included in the object combination.

In some possible implementations, the generating unit 701 is specifically configured to:
generate the at least one object combination based on target information of each object, where the target information of each object is configured to indicate an association relation between the object and other objects.

As an instance, the generating unit 701 is specifically configured to:
determine a matching main picture from pictures of a first object, where the matching main picture further includes at least one second object; and
determine a first object combination based on the matching main picture.

In the instance, first combination information corresponding to the first object combination includes a first region, a second region and a third region. The first region is configured to carry description information of the first object combination, the description information includes a matching main picture of the first object combination, and the matching main picture includes an object identifier of each object and an anchor point corresponding to each object. The second region is configured to carry matching information of the first object combination, and the matching information includes a title of matching and/or a resource attribute of the matching. The third region is configured to carry an interactive control of the first object combination, and the interactive control includes at least one of controls as follows: a feedback control, an editing control and a release control.

As another instance, the generating unit 701 is specifically configured to:
combine, based on categories to which all objects belong and a preset category mapping relation, objects belonging to a first category and objects belonging to a second category, and obtain candidate object combinations, where the first category and the second category belong to the category mapping relation; and
select an object combination satisfying an object association relation from the candidate object combinations, and obtain the at least one object combination, where the object association relation indicates that a historical association operation exists between the objects.

In the instance, the at least one object combination includes a second object combination. Second combination information corresponding to the second object combination includes a fourth region, a fifth region and a sixth region. The fourth region is configured to carry description information of the second object combination, the description information includes object information of each object in the second object combination, and the object information includes at least one piece of information as follows: a picture of an object, a title of the object, a resource attribute of the object or an identifier of the object. The fifth region is configured to carry matching information of the second object combination, and the matching information includes a title of matching and/or a resource attribute of the matching. The sixth region is configured to carry an interactive control of the second object combination, and the interactive control includes at least one of controls as follows: a feedback control, an editing control and a release control.

In some possible implementations, the apparatus 700 further includes:
a release unit configured to release a third object combination in response to a second operation in execution, where the third object combination is an object combination of the at least one object combination corresponding to the second operation, and the third object combination includes one or more object combinations.

In some possible implementations, the apparatus 700 further includes:
a scoring unit configured to add a matching score to the combination information, where the matching score is configured to guide display and/or release of the object combination.

It should be noted that for specific implementation modes and achieved technical effects of the apparatus 700, reference can be made to related descriptions of the method shown in FIG 1.

In addition, an example of the disclosure further provides an electronic device. The device includes a processor and a memory. The memory is configured to store an instruction or a computer program. The processor is configured to execute the instruction or the computer program in the memory, such that the electronic device is caused to execute any of embodiments of a comment presentation method provided in an example of the disclosure.

With reference to FIG. 8, a schematic structural diagram of an electronic device 800 suitable for implementing an example of the disclosure is shown in the figure. The terminal device in an example of the disclosure may include but is not limited to a mobile terminal such as a mobile phone, a notebook computer, a digital broadcast receiver, a personal digital assistant (PDA), a portable android device (PAD), a portable multimedia player (PMP), and an in-vehicle terminal (such as an in-vehicle navigation terminal), and a stationary terminal such as a digital television (TV) and a desktop computer. The electronic device shown in FIG. 8 is merely an instance, and should not impose any limitation on functions and usage scopes of examples of the disclosure.

As shown in FIG. 8, the electronic device 800 may include a processing unit (such as a central processing unit and a graphics processor) 801 that may execute various appropriate actions and processing according to programs stored in a read-only memory (ROM) 802 or loaded into a random-access memory (RAM) 803 from a storage unit 808. In the RAM 803, various programs and data required for operations of the electronic device 800 are further stored. The processing unit 801, the ROM 802 and the RAM 803 are connected to each other by means of a bus 804. An input/output (I/O) interface 805 is further connected to the bus 804.

Generally, the following apparatuses may be connected to the I/O interface 805: an input unit 806 including a touch screen, a touch pad, a keyboard, a mouse, a camera, a microphone, an accelerometer, a gyroscope, etc.; an output unit 807 including a liquid crystal display (LCD), a speaker, a vibrator, etc.; a storage unit 808 including a magnetic tape, a hard disk, etc.; and a communication unit 809. The communication unit 809 may allow the electronic device 800 to be in wireless or wired communication with other devices for data exchange. Although FIG. 8 shows an electronic device 800 having various apparatuses, it should be understood that not all of the shown apparatuses are required to be implemented or provided. More or fewer apparatuses may be alternatively implemented or provided.

In particular, according to an example of the disclosure, the process described above with reference to a flow diagram may be implemented as a computer software program. For instance, an example of the disclosure includes a computer program product. The computer program product includes a computer program carried on a non-transitory computer-readable medium, and the computer program includes a program code for executing the method shown in the flow diagram. In such an example, the computer program may be downloaded and mounted from a network by means of the communication unit 809, mounted from the storage unit 808, or mounted from the ROM 802. When executed by the processing unit 801, the computer program executes the above functions defined in a method in an example of the disclosure.

The electronic device provided in an example of the disclosure and the method provided in the above example belong to the same inventive concept. Reference can be made to the above example for technical details not described in detail in the example. Moreover, the example has the same beneficial effects as the above example.

An example of the disclosure further provides a computer-readable medium. The computer-readable medium stores an instruction or a computer program. When the instruction or the computer program is run on a device, the device is caused to execute any of embodiments of the comment presentation method provided in an example of the disclosure.

It should be noted that the above computer-readable medium in the disclosure may be a computer-readable signal medium, a computer-readable storage medium, or their combinations. The computer-readable storage medium may be but is not limited to an electronic, magnetic, optical, electromagnetic, infrared or semiconductor system, apparatus or device, or any combinations of the foregoing. More specific instances of the computer-readable storage medium may include but are not limited to an electrical connector having one or more wires, a portable computer disk, a hard disk, a random-access memory (RAM), a read-only memory (ROM), an erasable programmable read-only memory (EPROM or a flash memory), an optical fiber, a compact disc read-only memory (CD-ROM), an optical storage device, a magnetic storage device or any suitable combinations of the foregoing. In the disclosure, the computer-readable storage medium may be any tangible medium including or storing a program, and the program may be used by or in combination with an instruction execution system, apparatus or device. In the disclosure, a computer-readable signal medium may include a data signal propagated in a baseband or as part of a carrier wave, and a computer-readable program code is carried in the data signal. Such a propagated data signal may employ a plurality of forms, which include but are not limited to an electromagnetic signal, an optical signal or any suitable combinations of the foregoing. The computer-readable signal medium may also be any computer-readable medium rather than a computer-readable storage medium, and may send, propagate or transmit a program that is used by or in combination with an instruction execution system, apparatus or device. The program code included in the computer-readable medium may be transmitted by means of any appropriate media, which include but are not limited to a wire, an optical cable, a radio frequency (RF), etc., or any suitable combinations of the foregoing.

In some embodiments, a client and a server may carry out communication by means of any currently-known or future-developed network protocols such as a hyper text transfer protocol (HTTP), and may be interconnected to digital data communication (such as a communication network) of any forms or media. Instances of the communication network include a local area network (LAN), a wide area network (WAN), an internetwork (such as the internet), an end-to-end network (such as an ad hoc end-to-end network), and any currently-known or future-developed networks.

The above computer-readable medium may be included in the above electronic device, and may independently exist without being assembled into the electronic device.

The above computer-readable medium carries one or more programs. When the one or more programs are executed by the electronic device, the electronic device is caused to execute the above method.

The computer program code for executing an operation of the disclosure may be written in one or more programming languages or their combinations. The above programming languages include object oriented programming languages such as Java, Smalltalk and C++, and conventional procedural programming languages such as a "C" language or similar programming languages. The program code may be entirely executed on a user computer, partially executed on the user computer, executed as a stand-alone software package, partially executed on the user computer and partially executed on a remote computer, or entirely executed on the remote computer or a server. In a case that the remote computer is involved, the remote computer may be connected to the user computer by means of any type of network, which include a local area network (LAN) or a wide area network (WAN), or may be connected to an external computer (for instance, by means of the internet by an internet service provider).

Flow diagrams and block diagrams in accompanying drawings show system architectures, functions and operations, which may be implemented according to systems, methods and computer program products in various examples of the disclosure. In this regard, each block in flow diagrams or block diagrams can represent a module, a program segment, or a part of a code, which include one or more executable instructions for implementing specified logical functions. It should also be noted that in some substitutive implementations, functions noted in blocks can also occur in sequences different from those in figures. For instance, functions represented by two continuous blocks can be executed substantially in parallel in practice, and sometimes implemented in reverse sequences, which depends on the involved functions. It should also be noted that each block in flow diagrams and/or block diagrams, and combinations of the blocks in the flow diagrams and/or the block diagrams can be implemented by means of dedicated hardware-based systems that execute specified functions or operations, or can be implemented by means of combinations of dedicated hardware and computer instructions.

Units described in examples of the disclosure can be implemented in a form of software or hardware. In some cases, a name of a unit/module does not constitute a limitation on the unit itself.

At least part of the functions described above herein can be executed by one or more hardware logic components. For instance, without limitation, exemplary types of hardware logic components that may be used include a field programmable gate array (FPGA), an application specific integrated circuit (ASIC), an application specific standard product (ASSP), a system on a chip (SOC), a complex programmable logic device (CPLD), etc.

In a context of the disclosure, a machine-readable medium may be a tangible medium, which may include or store a program for being used by or in combination with an instruction execution system, apparatus or device. The machine-readable medium may be a machine-readable signal medium or a machine-readable storage medium. The machine-readable medium may include but is not limited to an electronic, magnetic, optical, electromagnetic, infrared or semiconductor system, apparatus or device, or any suitable combinations of the foregoing. More specific instances of the machine-readable storage medium may include an electrical connection based on one or more wires, a portable computer disk, a hard disk, a random-access memory (RAM), a read-only memory (ROM), an erasable programmable read-only memory (EPROM or a flash memory), an optical fiber, a compact disk read-only memory (CD-ROM), an optical storage device, a magnetic storage device or any suitable combinations of the foregoing.

It should be noted that each example in the description is described in a progressive manner, each example focuses on the differences from other embodiments, and reference can be made to the same and similar parts between the examples each other. Since a system or an apparatus disclosed in an example corresponds to a method disclosed in an example, the description is simple, and reference can be made to the description of the method for related contents.

It should be understood that in the disclosure, "at least one" refers to one or more pieces, and "a plurality of" refers to two or more pieces. The term "and/or" describing an association relation between associated objects indicates that there can be three relations. For instance, A and/or B can represent A alone, B alone and both A and B", and A and B can be in a singular or plural form. The character "/" generally indicates that associated objects in the context are in an "or" relation. "At least one of the following" or a similar expression means any combination of these items, which include a single one or any combination of a plurality of ones. For instance, at least one of a, b and or c can represent a, b, c, "a and b", "a and c", "b and c" or "a, b and c", and a, b, c can be in a singular or plural form.

It should be noted that relational terms such as first and second herein are merely configured to distinguish one entity or operation from another entity or operation without certainly requiring or implying any such actual relation or order between such entities or operations. In addition, terms "include", "comprise" or their any other variations are intended to cover non-exclusive inclusions, such that a process, a method, an article or a device including a series of elements not only includes those elements, but also includes other elements that are not explicitly released, or also includes inherent elements of such a process, a method, an article or a device. Under the circumstance of no more limitations, an element limited by sentence "including a ..." or "comprising a ..." does not exclude that there are other same elements in a process, a method, an article or a device including the element.

The steps of a method or algorithm described in combination with the examples disclosed herein may be directly implemented in hardware, in a software module executed by a processor, or in a combination of the two. The software module may be placed in a random access memory (RAM), a memory, a read-only memory (ROM), an electrically programmable ROM, an electrically erasable programmable ROM, a register, a hard disk, a removable disk, a CD-ROM, or storage media in any other forms known in the technical field.

It should be noted that in an example of the disclosure, user sensitive information is not involved, and user related information is acquired, used and determined after authorization by a user. In an instance, before the user related information is acquired, a corresponding interface displays reminding information related to obtainment of the data use authorization. The reminding information informs the user of a type, usage range, usage scenario, etc. of personal information involved in the disclosure in an appropriate manner according to relevant laws and regulations, such that the user determines whether to approve the authorization based on the reminding information. It can be understood that the above notification and user authorization acquisition processes are merely illustrative, and do not limit the implementation modes of the disclosure. Other modes satisfying related laws and regulations may also be applied to the implementation modes of the disclosure.

The above descriptions of the disclosed examples enable those skilled in the art to achieve or use the disclosure. Various modifications to these examples are obvious to those skilled in the art, and the general principles defined herein can be implemented in other examples without departing from the spirit or scope of the disclosure. Therefore, the disclosure is not limited to these examples shown herein but falls within the widest scope consistent with the principles and novel features disclosed herein.

## Claims

1. A method for generating an object combination, comprising:
generating at least one object combination in response to a first operation in execution, wherein each of the at least one object combination comprises at least two objects, and the at least two objects belonging to one object combination satisfy a preset matching condition; and
displaying combination information corresponding to the at least one object combination on a recommendation page, wherein the combination information comprises description information, matching information and interactive controls of objects included in the object combination.

2. The method of claim 1, wherein the generating at least one object combination comprises:
generating the at least one object combination based on target information of each object, wherein the target information of each object is used to indicate an association relation between the object and other objects.

3. The method of claim 2, wherein the generating the at least one object combination based on target information of each object comprises:
determining a matching main picture from pictures of a first object, wherein the matching main picture further comprises at least one second object; and
determining a first object combination based on the matching main picture.

4. The method of claim 3, wherein,
first combination information corresponding to the first object combination comprises a first region, a second region and a third region,
the first region is used to carry description information of the first object combination, the description information comprises a matching main picture of the first object combination, and the matching main picture comprises an object identifier of each object and an anchor point corresponding to each object,
the second region is used to carry matching information of the first object combination, the matching information comprises a title of matching and/or a resource attribute of the matching, and
the third region is used to carry an interactive control of the first object combination, and the interactive control comprises at least one of controls as follows: a feedback control, an editing control and a release control.

5. The method of claim 2, wherein the generating the at least one object combination based on target information of each object comprises:
combining, based on categories to which all objects belong and a preset category mapping relation, objects belonging to a first category and objects belonging to a second category, and obtaining candidate object combinations, wherein the first category and the second category belong to the category mapping relation; and
selecting an object combination satisfying an object association relation from the candidate object combinations, and obtaining the at least one object combination, wherein the object association relation indicates that a historical association operation exists between the objects.

6. The method of claim 5, wherein,
the at least one object combination comprises a second object combination, second combination information corresponding to the second object combination comprises a fourth region, a fifth region and a sixth region,
the fourth region is used to carry description information of the second object combination, the description information comprises object information of each object in the second object combination, the object information comprises at least one piece of information as follows: a picture of an object, a title of the object, a resource attribute of the object or an identifier of the object,
the fifth region is used to carry matching information of the second object combination, the matching information comprises a title of matching and/or a resource attribute of the matching, and
the sixth region is used to carry an interactive control of the second object combination, and the interactive control comprises at least one of a feedback control, an editing control and a release control.

7. The method of any of claims 1-6, further comprising:
releasing a third object combination in response to a second operation in execution, wherein the third object combination is an object combination of the at least one object combination corresponding to the second operation, and the third object combination comprises one or more object combinations.

8. The method of any of claims 1-7, further comprising:
adding a matching score to the combination information, wherein the matching score is used to guide display and/or release of the object combination.

9. An apparatus for generating an object combination, comprising:
a generating unit configured to generate at least one object combination in response to a first operation in execution, wherein each of the at least one object combination comprises at least two objects, and the at least two objects belonging to one object combination satisfy a preset matching condition; and
a displaying unit configured to display combination information corresponding to the at least one object combination on a recommendation page, wherein the combination information comprises description information, matching information and interactive controls of objects included in the object combination.

10. An electronic device, comprising a processor and a memory;
the memory storing an instruction or a program; and
the processor executing the instruction or the program in the memory to cause the electronic device to perform the method of any of claims 1-8.

11. A readable medium, wherein the readable medium stores an instruction or a program that, upon running on a processor, causes the processor to perform the method of any of claims 1-8.
